# EUROPEAN PATENT APPLICATION

(11) **EP 1 890 455 A1**
(43) Date of publication of application: **20.02.2008**
(21) Application number: 06017303.6
(22) Date of filing: 18.08.2006
(51) Int. Cl.: H04L 29/06

(54) **Method and apparatus for handover to a WLAN connection involving a trigger for mobility at Packet Data Gateway (PDG)**

(71) Applicant: Nokia Siemens Networks GmbH & Co. KG, 81541 München (DE)
(72) Inventor: Punz, Gottfried, Dr., 1080 Wien (AT)

(57) **Abstract**

The invention concerns a method for handover of a WLAN connection or a cellular mobile network connection between a Home Agent (HA) and a mobile station (UE) to a WLAN connection between a Home Agent (HA) and the mobile station (UE), wherein an IPSec Tunnel (Fig. 3b: IPSec) between the mobile station (UE) and a Packet Data Gateway (PDG) is serially connected to a Mobile Internet Protocol tunnel (Fig. 3b: MIP) between the Packet Data Gateway (PDG) and the Home Agent (Fig. 3b: HA).

## Description

The invention concerns a method for handover of a cellular mobile network connection.

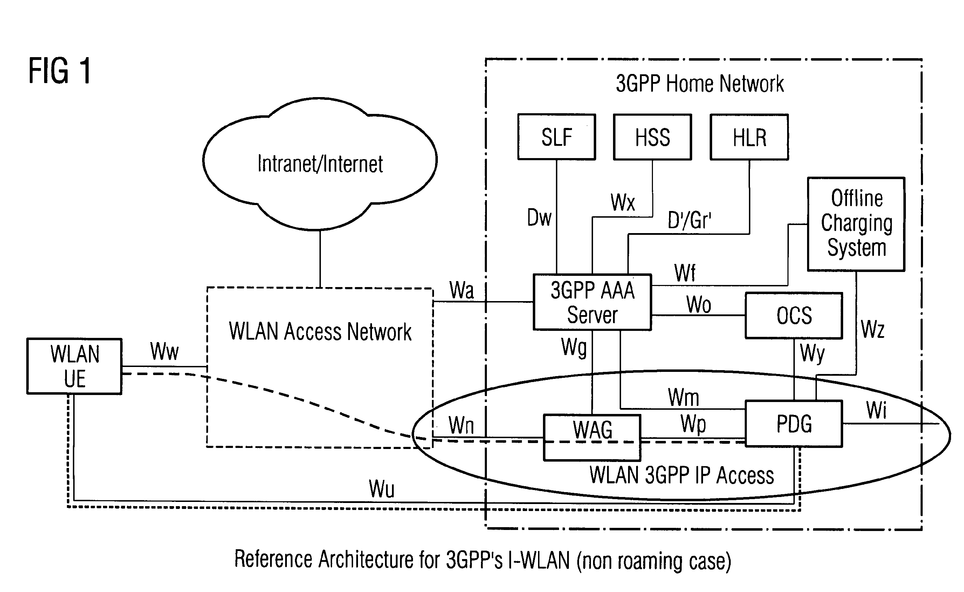

3GPP has developed specifications to integrate WLAN access networks into their global mobile network infrastructure (Interworked WLAN / I-WLAN) [1],[2],[3],[7]. Till now this covers only scenarios up to 3, excluding service continuity and seamless service (across mobility events). The defined architecture is depicted in Fig. 1 for the non-roaming case of WLAN 3GPP IP Access.

The interworking consists in an IPSec/ESP tunnel (thick dashed line) between the UE (User Equipment) and the Packet Data Gateway (PDG) for the user plane (see [5]). The corresponding signaling is done between UE and PDG (thick dotted line) and contains an IKEv2 exchange [4]. This cares for the untrusted nature of the WLAN access network.

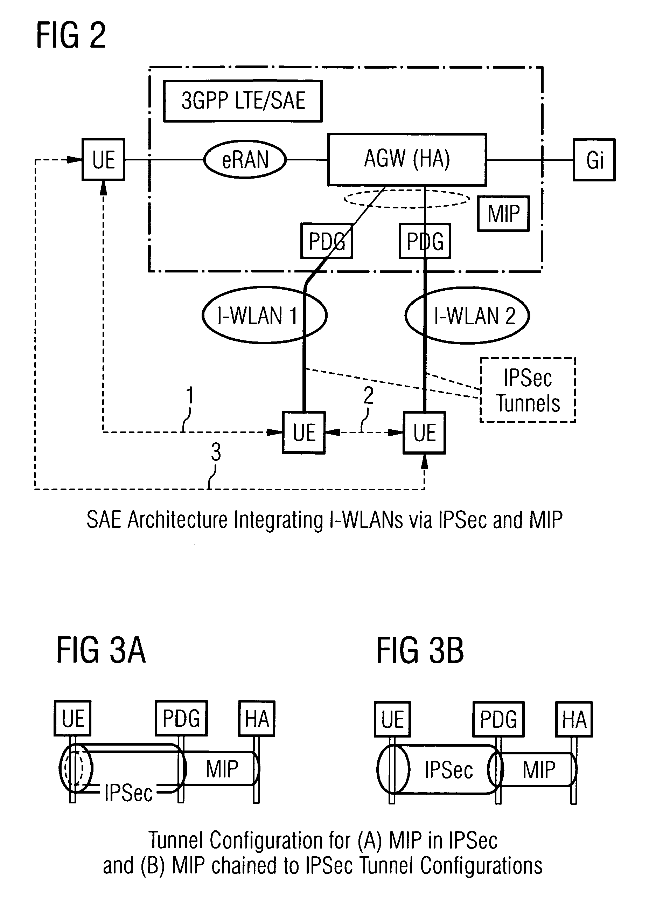

With 3GPP Long Term Evolution (LTE, of RAN) and System Architecture Evolution (SAE) the target is to enable also seamless handovers to non-3GPP access networks, in particular to I-WLANs. The situation is sketched in Fig. 2 for two I-WLANs connected to two different PDGs. The possible mobility events (1 to 3) are listed. The LTE/SAE consists of the Evolved Radio Access Network (eRAN) and the Access Gateway (AGW, which may be split further into more entities), and it has its own mobility scheme. For integration of the I-WLANs Mobile IP (MIP) is envisaged, where the AGW acts as a Home Agent (HA). This could be fully client based (in this case the UE performs the MIP signaling and packet encapsulation within the IPSec tunnel). The triggers for MIP registrations are then exclusively with the UE, and they are separate from the tunnel setup procedures. The resulting tunnel setup is shown in fig. 3a.

The other alternative is a modified proxy MIP, on which we concentrate here. The resulting tunnel configuration is shown in Fig. 3b. In this case triggers for proxy MIP registrations are needed at PDG. The successful setup of an IPSec tunnel could be used as a trigger for proxy MIP registrations, but without further information about the mobility state this would not be a unique criterion. It is therefore proposed to overload the IKE protocol messages within the IPSec tunnel setup with mobility related information.
It is an object of the invention to improve handover handling in mobile networks. The object is achieved by the invention respectively defined in the patent claims.

Further details and advantages of the invention are set forth in the following description, wherein in the enclosed drawing:

| | |
|---|---|
| Figure 1 shows: | a reference architecture for 3GPP's I-WLAN(non roaming case) |
| Figure 2 shows: | a SAE Architecture Integrating I-WLANs via IPSec and MIP, |
| Figure 3 shows: | a Tunnel Configuration for (a) MIP in IPSec and (b) MIP chained to an IPSec Tunnel, |
| Figure 4 shows: | an IPSec tunnel establishment (message flow acc. to section 6.1.5.1 in [1] with modified message 1 and additional action 12a) |

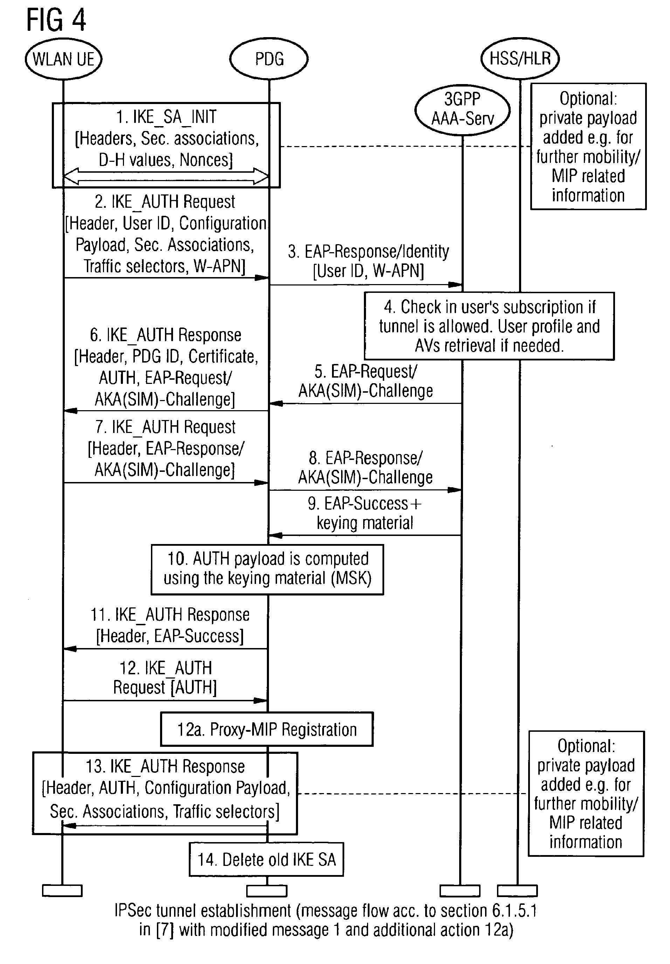

The technical solution modifies the parameters in the message flow for IPSec tunnel establishment according to section 6.1.5.1 of [7], as shown in the Fig. 4.

The solution can comprise using the private range of e.g. values 240-255 for the parameter "Exchange Type" in the IKE header. If the value was 34 (for setting "IKE_SA_INIT", see [4]) in the original behaviour, it could be defined e.g. to the value 240. The meaning is then still "IKE_SA_INIT" (creation of an IPSec tunnel), but also that after successful completion a proxy MIP registration shall be done towards the HA. The IP address can be extracted from the IP packet containing the IKEv2 message. To communicate further mobility/MIP related information to the PDG (to be used for the subsequent Proxy-MIP message), a private payload type within IKEv2 can be defined.

The Proxy MIP registration response can use the analogous prescription and may be mapped to the "IKE_SA_AUTH" with response bit set and with a private value of "Exchange Type" in the header (e.g. 241 instead of 35). The meaning is then still "IKE_SA_AUTH" (authentication response of an IPSec tunnel), but it indicates also that the Proxy-MIP registration has been done before. Again, private payload types within IKEv2 can be defined to transport mobility/Proxy-MIP related information to the UE (as response from HA via PDG).

MIP tunnel maintenance can be made directly dependent on the existence of the IPSec tunnel: as long as it exists, the Proxy MIP functionality in PDG should refresh MIP bindings.

MIP deregistration can occur in two forms:
1. if another IPSec tunnel e.g. to another PDG is created with the same mobility indications (UE requests MIP registration via the above described special "IKE_SA_INIT" message), or
2. the UE comes back "home" (moves into LTE/SAE access); in this case the AGW may delete the cache entry based on information from the LTE/SAE internal mobility handling.

### Advantages and Implications:

The additional MIP tunnel inside the IPSec tunnel can be avoided; instead, IPSec and MIP tunnels are chained one after the other. Thus, tunnel overhead is saved between UE and PDG, which includes the critical radio interface leg. Also the extra MIP signaling from the client (UE) is saved - the IPSec tunnel has to be established anyway.

The security complications, normally present with MIP, are avoided, as IPSec security features can be reused for MIP.

The necessary changes are
■ within UE:
   o support of two private parameters in IKEv2 header
   o support of one private IKEv2 payload type, based on mobility events (corresponding to a MIP de/registration).
■within PDG:
   o support of two private parameters in IKEv2 header o support of one private IKEv2 payload type
   o mapping of special "IKE_SA_INIT" message onto Proxy-MIP registration and mapping of Proxy-MIP registration response onto "IKE_SA_AUTH" response message
   o maintaining the MIP binding by registration refreshes, as long as the IPSec tunnel is established

### Abbreviations

- AGW: Access Gateway
- eRAN: Evolved Radio Access Network
- ESP: Encapsulated Security Payload
- HA: Home Agent
- IKEv2: Internet Key Exchange Version 2
- IPSec: IP Security (defined in [6])
- I-WLAN: Interworked WLAN (of 3GPP)
- LTE: Long Term Evolution (of RAN)
- MIP: Mobile IP
- PDG: Packet Data Gateway
- (e)RAN: (Evolved) Radio Access Network
- SAE: System Architecture Evolution
- UE: User Equipment

- IPSec: A Secure Internet Protocol

### References

[1] 3GPP TS 33.234 V6.5.1 (2005-06), 3G Security; Wireless Local Area Network (WLAN) Interworking Security
[2] 3GPP TS 23.234 V6.5.0 (2005-06), 3GPP System to Wireless Local Area Network (WLAN) Interworking; System description
[3] 3GPP TS 29.234 V6.3.0 (2005-06), 3GPP system to Wireless Local Area Network (WLAN) Interworking; Stage 3
[4] C. Kaufman (ed.), Internet Key Exchange (IKEv2) Protocol, draft-ietf-ipsec-ikev2-17.txt, September 2004 (Note: meanwhile this protocol is already specified in the form of an RFC: C. Kaufmann (ed.), "Internet Key Exchange Protocol IKEv2", RFC 4306, December 2005)
[5] S. Kent, R. Atkinson, IP Encapsulating Security Payload (ESP), RFC 2406, November 1998
[6] S. Kent, R. Atkinson, Security Architecture for the Internet Protocol, RFC 2401, November 1998
[7] 3GPP TR 22.934 V6.2.0 (2003-09), Feasibility study on 3GPP system to Wireless Local Area Network (WLAN) interworking

## Claims

1. Method for handover of a WLAN connection or a cellular mobile network connection between a Home Agent (HA) and a mobile station (UE) to a WLAN connection between a Home Agent (HA) and the mobile station (UE),
wherein an IPSec Tunnel (Fig. 3b: IPSec) between the mobile station (UE) and a Packet Data Gateway (PDG) is serially connected to a Mobile Internet Protocol tunnel (Fig. 3b: MIP) between the Packet Data Gateway (PDG) and the Home Agent (HA) .

2. Method according to claim 1,
**characterized in that** a range, especially a private range, of values for the parameter "Exchange Type" in an IKE header is used to induce creation of an IPSec tunnel ("IKE_SA_INIT").

3. Method according to claim 2,
**characterized in that** successful completion of creation of an IPSec tunnel triggers a proxy MIP registration towards the Home Agent (HA).

4. Method according to claim 2 or 3,
**characterized in that** the private range is a range of values 240-255 for the parameter "Exchange Type" in the IKE header.

5. Method according to any of the preceding claims,
**characterized in that** the IP address of the Home Agent (HA) and/or a mobile station (UE) is extracted from an IP packet containing a "IKEv2" message.

6. Method according to any of the preceding claims,
**characterized in that** to communicate Mobile Internet Protocol (MIP) options to the Packet Data Gateway (PDG), a private payload type within "IKEv2" is used.

7. Method according to any of the preceding claims,
**characterized in that** the MIP registration response uses the same prescription as the "Exchange Type" in the IKE header and it is mapped to the "IKE_SA_AUTH" with a response bit set.

8. Method according to any of the preceding claims,
**characterized in that** Mobile Internet Protocol (MIP) tunnel maintenance is made directly dependent on the existence of the IPSec tunnel.

9. Method according claim 8,
**characterized in that** as long as the IPSec tunnel exists, the proxy Mobile Internet Protocol (MIP) functionality in the Packet Data Gateway (PDG) refreshes MIP bindings.

10. Method according to any of the preceding claims,
**characterized in that** a Mobile Internet Protocol (MIP) deregistration is carried out
- if another IPSec tunnel to another PDG is created with the same mobility indications, the UE requesting MIP registration via the special "IKE_SA_INIT" message,
- or if the UE moves back into its cellular mobile network (LTE/SAE access).

11. Method according to claim 10,
**characterized in that** in this case the access gateway (AGW) deletes the cache entry based on information from the LTE/SAE internal mobility handling.

12. Method according to any of the preceding claims,
**characterized in that** to communicate further Mobile Internet Protocol (MIP) options to the Packet Data Gateway (PDG), a private payload type within the IKEv2 parameter is defined.

13. Mobile network for carrying out a method according to any of the preceding claims.
